(19) Europäisches Patentamt / European Patent Office / Office européen des brevets

(11) **EP 3 042 884 B1**

(12) **EUROPÄISCHE PATENTSCHRIFT**

(45) Veröffentlichungstag und Bekanntmachung des Hinweises auf die Patenterteilung:
**18.01.2023 Patentblatt 2023/03**

(21) Anmeldenummer: **15202066.5**

(22) Anmeldetag: **22.12.2015**

(51) Internationale Patentklassifikation (IPC):
***C04B 30/02*** *(2006.01)* ***C04B 14/06*** *(2006.01)*
***C04B 111/28*** *(2006.01)* ***C04B 111/50*** *(2006.01)*
***B01J 13/00*** *(2006.01)* ***C01B 33/16*** *(2006.01)*
***D04H 1/00*** *(2006.01)* ***D04H 13/00*** *(2006.01)*
***F16L 59/00*** *(2006.01)* ***D04H 1/413*** *(2012.01)*

(52) Gemeinsame Patentklassifikation (CPC):
(C-Sets verfügbar)
**C04B 30/02; B01J 13/0091; C01B 33/16; C01B 33/163; C04B 14/064; D04H 1/413;**
C04B 2111/28; C04B 2111/50 (Forts.)

(54) **FLEXIBLE KOMPOSITE AUF BASIS VON AEROGELEN**
FLEXIBLE COMPOSITES BASED ON AEROGELS
COMPOSITE SOUPLE A BASE D'AEROGELS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.01.2015 DE 102015200191**

(43) Veröffentlichungstag der Anmeldung:
**13.07.2016 Patentblatt 2016/28**

(73) Patentinhaber: **Deutsches Zentrum für Luft- und Raumfahrt e.V.**
**51147 Köln (DE)**

(72) Erfinder:
- **Fener, Resul**
  **53572 Unkel (DE)**
- **Niemeyer, Philipp**
  **52064 Aachen (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**US-A- 5 789 075**

- **GEN HAYASE ET AL: "Facile Synthesis of Marshmallow-like Macroporous Gels Usable under Harsh Conditions for the Separation of Oil and Water", ANGEWANDTE CHEMIE INTERNATIONAL EDITION, Bd. 52, Nr. 7, 10. Januar 2013 (2013-01-10), Seiten 1986-1989, XP055263753, DE ISSN: 1433-7851, DOI: 10.1002/anie.201207969**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

**(Forts. nächste Seite)**

(52) Gemeinsame Patentklassifikation (CPC): (Forts.)

C-Sets
**C04B 30/02, C04B 14/064**

## Beschreibung

Die vorliegende Erfindung betrifft ein flexibles Aerogel-Komposit, wobei das Aerogel ein Silica-Aerogel ist, sowie ein Verfahren zur dessen Herstellung.

Aerogele sind hochporöse Festkörper, deren Volumen zum größten Teil aus Poren besteht. Als Werkstoff sind sie seit langem bekannt. Sie zeichnen sich durch eine sehr geringe Dichte, eine hohe spezifische Oberfläche, niedrige Wärmeleitfähigkeit sowie eine hohe akustische Impedanz aus.

Aerogele sind aus unterschiedlichsten Materialien bekannt. Häufig verbreitet sind Aerogele auf Silikatbasis. Beschrieben sind jedoch auch Aerogele aus Metalloxiden oder organische Aerogele, wie beispielsweise auf der Basis von Resorcinformaldehyd. Weitere organische Aerogele auf der Basis von MelaminFormaldehyd, Cellulose oder Alginat wurden ebenfalls beschrieben.

Praktisch alle bekannten Aerogele sind spröde Werkstoffe, das heißt bei inhomogener mechanischer Belastung brechen sie ohne vorherige bleibende Verformung. Bei homogener mechanischer Belastung sind sie praktisch nicht elastisch verformbar. Vielmehr brechen die Aerogele auseinander.

Die Synthese von Aerogelen erfolgt typischerweise mittels eines Sol-Gel-Prozesses. Nach der Gelation und gegebenenfalls einer Alterung des Gels wird das noch im Gel enthaltene Lösungsmittel häufig unter überkritischen Bedingungen ausgetauscht. Dies ist einerseits notwendig, um die anschließende Trocknung zu ermöglichen. Zum anderen werden hier beim Sol-Gel-Verfahren nicht abreagierte Edukte und unerwünschte Nebenprodukte entfernt. Gerade dieser Lösungsmittelaustausch stellt häufig den limitierenden Faktor bei der Herstellung von Aerogelen dar.

Im Stand der Technik beschrieben ist ein Lösungsmittelaustausch, der durch Diffusion erreicht wird. Mit zunehmender Größe eines aus Aerogel bestehenden Gegenstandes nimmt diese Diffusion beziehungsweise die hierfür benötigte Zeit quadratisch mit dem kleinsten Probendurchmesser zu. Meist müssen 5 bis 20 Waschzyklen durchgeführt werden, die jeweils mehrere Stunden benötigen, so dass der gesamte Lösungsmittelaustausch oft einige Tage benötigt. Die Herstellungskosten von Aerogelen werden daher maßgeblich durch diese Waschzeit mitbestimmt, da auch ein hoher Raumbedarf erforderlich ist, in welchem die Proben während des Lösungsmittelaustausches lagern können. Da das Sol beziehungsweise die erhaltenen Gele jedoch vor dem eigentlichen Trocknen nicht formstabil sind, ist es nicht möglich die Gele aus der Herstellungsform herauszunehmen und beispielsweise wie einen Schwamm auszudrücken, um das darin enthaltene Lösungsmittel zu entfernen. Hierbei würden die Gele zerstört werden.

Im Stand der Technik beschrieben sind flexible Silica-Aerogele, bei denen als Ausgangsmaterial trifunktionale Siliziumalkoxide verwendet werden (A. V. Rau et al.: Superhydrophobic and Flexible Aerogels, in: M.A. Aegerter et al (EDS), Aerogels Handbook, Advances in Sol Gel derived materials and technologies, Springer Science and Business Media, LLC 2011). Die entsprechend hergestellten Aerogele sind elastisch verformbar. Bei der Herstellung ist es jedoch auch hier notwendig, dass ein Lösungsmittelaustausch mittels Diffusion erfolgt. Auch sind weder die nassen Gele noch die trockenen Aerogele auf Zug oder Scherung beanspruchbar. Durch die mikro- und mesoporöse Struktur von Gelen und Aerogelen ist die maximale Zugfestigkeit und Scherfestigkeit durch intrinsische Kerbwirkung und dadurch, dass die Netzwerk-bildenden Teilchen oft nur durch Brücken von wenigen Nanometern beziehungsweise wenigen 10 nm verbunden sind, stark limitiert.

US 5,789,075 A **beschreibt ein flexibles Aerogel-Komposit, dass aus Fasern und einem Silica-Aerogel gebildet wird. Die Fasern können dabei entweder als einzelne Fasern oder als Gewebe eingearbeitet werden. Das Aerogel liegt in Form von Fragmenten mit einem durchschnittlichen Volumen von 0,1 bis 30 mm$^3$ vor, wobei die Flexibilität des Komposits durch die Lücken zwischen Aerogel-Fragmenten bedingt ist.**

GEN HAYASE et al: "Facile Synthesis of Marshmallow-like Macroporous Gels Usable under Harsh Conditions for the Separation of Oil and Water", Angewandte Chemie international Edition, Bd, 52, Nr. 7, 10. Januar 2013 (2013-01-10), Seiten 1986-1989, XP055263753, DE ISSN: 1433-7851, DOI: 10.1002/anie.201207969 **werden als Ausgangsstoffe für ein Aerogel MTMS und DMDMS eingesetzt. Mit diesen Bestandteilen wird ein makroporöses flexibles Gel erhalten.**

Es besteht daher Bedarf an Aerogel-haltigen Materialen, die auf Zug und/oder Scherung beanspruchbar sind und im Wesentlichen die Eigenschaften von Aerogelen aufweisen. Zudem sollten die Materialien in einem Herstellungsverfahren bereitgestellt werden können, in welchem der Lösungsmittelaustausch gegenüber dem Stand der Technik beschleunigt werden kann.

Überraschenderweise hat sich gezeigt, dass ein Komposit, welches ein Silica-Aerogel sowie ein dreidimensionales makroporöses Fasernetzwerk umfasst, die aus dem Stand der Technik beschriebenen Nachteile vermeidet.

In einer ersten Ausführungsform wird die der vorliegenden Erfindung zugrundeliegende Aufgabe daher gelöst durch ein flexibles Aerogel-Komposit, welches ein Silica-Aerogel, gebildet aus wenigstens einem difunktionellen Silan und wenigstens einem trifunktionellen Silan, und ein 3-dimensionales makroporöses Fasernetzwerk, in dem die Fasern an den Berührungspunkten kraftschlüssig miteinander verbunden sind, umfasst **wobei das Fasernetzwerk eine Porengröße von 0,5 mm oder mehr aufweist.**

Überraschenderweise ist das erfindungsgemäße flexible Komposit stabil gegenüber Beanspruchung durch

Zugkräfte und/oder Scherung.

Ein difunktionelles Silan im Sinne der vorliegenden Erfindung ist ein Siloxan, welches zwei Alkoxy-Gruppen (OR') sowie zwei Alkyl-Gruppen (R) umfasst und in der folgenden Formel I schematisch gezeigt sind:

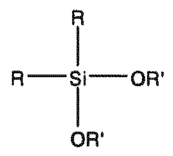

(Formel I)

Dabei sind R und R' Alkylgruppen, die jeweils gleich oder voneinander verschieden sein können. Vorzugsweise sind die Alkylgruppen kurzkettig und weisen insbesondere bevorzugt 1 bis 3 Kohlenstoffatome auf. Besonders bevorzugt sind R und/oder R' ausgewählt aus Methyl und Ethyl. Besonders bevorzugt sind R und R' gleich. Difunktionelle Silane im Sinne der vorliegenden Erfindung sind beispielsweise Dimethoxydimethylsilan, Dimethoxydiethylsilan, Diethoxydimethylsilan oder Diethoxydiethylsilan.

Entsprechend sind trifunktionelle Silane im Sinne der vorliegenden Erfindung solche Silane, welche drei funktionelle Gruppen aufweisen, in welchen kurzkettige Kohlenwasserstoffreste über ein Sauerstoffatom an Silicium angebunden sind und der folgenden allgemeinen Formel II entsprechen, in welcher R und R' wie zu Formel I beschrieben ausgewählt werden:

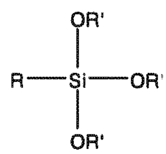

(Formel II)

Auch hier ist ebenso wie bei den difunktionellen Silanen aufgrund der sterischen Freiheit keine Ausbildung eines starren Netzwerkes möglich, so dass sich hieraus eine Flexibilität des gebildeten Aerogels ergibt.

Dabei ist die Flexibilität einerseits eine intrinsische Eigenschaft des Materials. Zu berücksichtigen ist hier jedoch auch die 3-dimensionale Ausgestaltung des fraglichen Gegenstandes und das sich hieraus ergebende Flächenträgheitsmoment. Um die Flexibilität von Aerogelen zu beschreiben, muss man sich zunächst die Struktur der Aerogele in einem erfindungsgemäßen Komposit ansehen. Die Aerogele liegen als kleine Partikel vor, welche über kleinste Brücken miteinander verbunden sind. Diese Aerogele umschließen dann einen Hohlraum. Fig. 1 zeigt schematisch den entsprechenden Aufbau. Die Zellwände, welche vom Aerogel gebildet werden, weisen eine Schichtdicke $t_w$ und eine Zellgröße $t_c$ auf. Zur Vereinfachung wird zunächst davon ausgegangen, dass die Zellwände in Form von Balken mit einer Schichtdicke $t_w$ vorliegen. Ausgehend von annähernd quadratischen Zellen ergibt sich eine Porengröße von $t_p = t_c - t_w$.

Um den Volumenanteil an festem Material innerhalb der Zelle zu bestimmen, wird zunächst das Volumen aller Balken nach der folgenden Formel (1) berechnet:

$$V_a = 4t_w^2 t_c + 8t_w^2 (t_c - 2t_w) \qquad (1)$$

Das Zellenvolumen entspricht:

$$V_c = t_c^3 \qquad (2)$$

so dass sich ein Volumenanteil an Aerogel, also an festem Material, gemäß der folgenden Formel (3) ergibt:

$$\phi_a = \frac{V_a}{V_c} = \frac{4t_w^2 t_c + 8t_w^2 (t_c - 2t_w)}{t_c^3} \qquad (3)$$

Geht man nun davon aus, dass $4t_w/(3t_c) \ll 1$, kann diese Formel vereinfacht werden zu:

$$\phi_a = 12\frac{t_w^2}{t_c^2} \quad (4)$$

Mit Hilfe dieser Formel kann nun die Wanddicke $t_w$ in Abhängigkeit der Porosität $\phi_p = 1 - \phi_a$ unter der Annahme von $\phi_a = \rho_e/\rho_s$, ( mit $\rho_s$: skeletal density und $\rho_e$: envelope density) angegeben werden:

$$t_w = \frac{\sqrt{\phi_a}}{2\sqrt{3}}t_c = \frac{\sqrt{1-\phi_p}}{2\sqrt{3}}t_c = \frac{\sqrt{\rho_e}}{2\sqrt{3\rho_s}}t_c \quad (5)$$

Um nun auf die Flexibilität zurück zu kommen, geht man davon aus, dass eine Kraft an der in Fig. 1 gezeigten Zelle wirkt. Diese Kraft würde zu einer Deformation der Zelle und damit zu einer Deformation der Wände, also der Balken, führen. Diese Deformation beginnt parallel zu der Krafteinwirkung. Die Balken biegen sich, wie in Fig. 2 schematisch dargestellt. Wie in dieser Darstellung bereits erkennbar ist, ist der Biegeradius von der Dicke des gebogenen Gegenstandes abhängig. Der Biegeradius $R_c$ kann mit bekannten Theorien berechnet werden:

$$R_c = \frac{EI}{M} \quad (6)$$

mit $M = F\ t_c/2$ als Biegemoment und $I$ als zweitem Trägheitsmoment des Balkens. Aus Symmetriegründen reicht die Betrachtung eines Viertels des Würfels, also der in Fig. 1 schematisch gezeigten Zelle, für die weitere Berechnung.

Die Flexibilität des Balkens ergibt sich somit nach

$$\mathcal{F} = \frac{1}{R_c M} = \frac{1}{EI} \quad (7)$$

Diese Formel (7) zeigt, dass die Flexibilität nicht eine einfache Materialeigenschaft ist (wie beispielsweise der E-Modul), sondern auf Grund der Abhängigkeit von $I$ von der Form des Gegenstandes abhängt. Für ein Quadrat berechnet sich $I_w$ nach:

$$I_w = \frac{1}{12}t_w^4 \quad (8)$$

Das Moment der Zelle ohne Poren ergibt sich aus:

$$I_c = \frac{1}{12}t_c^4 \quad (9)$$

Somit kann die Flexibilität der Zelle bestimmt werden:

$$\mathcal{F}_c = \frac{1}{E_c I_c} \quad (10)$$

Hieraus ergibt sich die Flexibilität des porösen Materials unter Berücksichtigung einer quadratischen Form:

$$\mathcal{F}_w = \frac{1}{E_a I_w} \tag{11}$$

$E_a$ ist hier der E-Modul (Young Modul) des Aerogel-Rückgrats. Dieses weist nicht den E-Modul eines Aerogels auf, sondern den Modul von Teilchen, welche über kleine Brücken miteinander verbunden sind, wie es in Fig. 1 links schematisch gezeigt ist. Dieser ist üblicherweise kleiner als der eines festen, kompakten Materials $E_c$. Unter der Annahme, dass $\rho_w \leq \rho_s$, ergibt sich nach L.J. Gibson und M.F. Ashby (Cellular Solids, 2nd Edition, Cambridge University Press, Cambridge UK (1997)) ein Young Modul von:

$$E_a = E_c \left(\frac{\rho_w}{\rho_s}\right)^2 \tag{12}$$

Setzt man nun die Gleichungen 12, 5 und 9 in Gleichung 11 ein, so erhält man den folgenden Ausdruck für die Flexibilität:

$$\mathcal{F}_w \propto \frac{1}{\rho_e^2 t_w^4} \propto \frac{1}{\rho_e^2 \rho_w^2 t_c^4} \tag{13}$$

Dieser in Gleichung (13) gezeigte Ausdruck zeigt, dass eine geringere Aerogeldichte zu einer größeren Flexibilität führt und dass auch eine geringere Porengröße eine größere Flexibilität ermöglicht. Ebenfalls ergibt sich hieraus, dass ein kompakter Körper eine geringere Flexibilität aufweist als eine Kette von aneinandergereihten, kleinen sekundären Partikeln, die miteinander über ausgebildete Partikelhälse in Kontakt stehen.

Ebenso besteht ein Zusammenhang zwischen der Flexibilität und der Porengröße des Materials. Das Verhältnis der Flexibilität eine Materials ohne Poren und eines porösen Materials bestimmt sich nach

$$F = \frac{\mathcal{F}_w}{\mathcal{F}_c} = \frac{E_c I_c}{E_a I_w} \tag{14}$$

Führt man dies mit den bisherigen Berechnungen zusammen, so ergibt sich:

$$F = \frac{E_c t_c^4}{E_a t_w^4} \tag{15}$$

Aus der Berechnung des Volumenanteils ergibt sich ein Verhältnis zwischen $t_w$ und $t_c$, so dass sich hieraus

$$F = \frac{1}{144} \frac{E_c}{E_a} \frac{\rho_s^2}{\rho_e^2} \tag{16}$$

ergibt. Zusammen mit Gleichung (12) erhält man:

$$F = \frac{1}{144} \left(\frac{\rho_s}{\rho_e}\right)^2 \left(\frac{\rho_s}{\rho_w}\right)^2 \propto \frac{1}{\rho_e^2 \rho_w^2} \propto \frac{1}{(1-\phi_p)^2} \tag{17}$$

Aus Gleichung (17) ergibt sich somit ein Zusammenhang zwischen der Porosität und der Flexibilität.

Dies zeigt, dass Flexibilität eine eigenständige Eigenschaft eines Materials ist, welche nicht mit dem E-Modul gleich gesetzt werden kann. Dabei ist überraschenderweise keine Abhängigkeit von der Größe der Aerogelpartikel gegeben.

Überraschenderweise hat sich gezeigt, dass die Kombination aus einem Silica-Aerogel, welches aus wenigstens einem difunktionellen Silan und wenigstens einem trifunktionellen Silan gebildet ist, und einem dreidimensionalen makroporösen Fasernetzwerk zu einem flexiblen Komposit führt. Das erfindungsgemäße Komposit ist sowohl im nassen als auch im trockenen Zustand zug- und scherfest. Durch die erhöhte mechanische Belastbarkeit im nassen sowie im trockenen Zustand ist die Darstellung von komplexen Geometrien möglich. Somit stellt das erfindungsgemäße Komposit ein interpenetrierendes Netzwerk wenigstens zweier Komponenten dar.

Erfindungsgemäß kann das Silica-Aerogel aus einem difunktionellen Silan bestehen. Es ist jedoch auch möglich unterschiedliche difunktionelle Silane einzusetzen. Ebenso ist es möglich, zur Ausbildung des Silica-Aerogels ein trifunktionelles Silan oder mehrere unterschiedliche trifunktionelle Silane einzusetzen. Bevorzugt wird das Silica-Aerogel aus einem difunktionellen Silan und einem trifunktionellen Silan gebildet. Besonders bevorzugt auf Grund der Reaktionskinetik zur Hydrolyse sind das difunktionelle Silan Dimethyldimethoxysilan und das trifunktionelle Silan Methyltrimethoxysilan. Bei längeren Alkylketten R beziehungsweise R’ sinkt die Geschwindigkeit der Hydrolyse.

In einer bevorzugten Ausführungsform ist das Aerogel weiterhin aus einem tetrafunktionellen Silan gebildet. Überraschenderweise hat sich gezeigt, dass durch den Einsatz von difunktionellen, trifunktionellen und tetrafunktionellen Silanen zur Ausbildung eines Silica-Aerogels eine verbesserte Temperaturstabilität erreicht werden kann.

Tetrafunktionelle Silane im Sinne der vorliegenden Erfindung entsprechen der allgemeinen Formel III

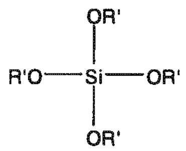

(Formel III)

in welcher R’ dieselbe Bedeutung wie zu den difuktionellen Silanen ausgeführt hat.

Vorzugsweise beträgt der Anteil an tetrafunktionellem Silan wenigstens 5 Mol% bezogen auf 100 Mol% an difunktionellem, trifunktionellem und tetrafunktionellem Silan. Ein Anteil von mehr als 10 Mol% tetrafunktionellem Silan führt dazu, dass die mechanischen Eigenschaften des erfindungsgemäßen Komposits nachteilig beeinflusst werden und ein sprödes Verhalten auftritt, welches mit zunehmendem Anteil an tetrafunktionellem Silan zum vorherrschenden Verhalten wird. Flexible Eigenschaften treten dann in den Hintergrund.

Das Stoffmengenverhältnis von trifunktionellem Silan zu difunktionellem Silan liegt vorzugsweise im Bereich von 2:1 bis 1:1. Wird der Stoffmengenanteil des difunktionellen Silans weiter gesteigert, erfolgt keine vollständige Gelation. Das Gewichtsverhältnis von trifunktionellem Silan zu difunktionellem Silan beträgt vorzugsweise 1:0,59.

Das erfindungsgemäße Komposit umfasst weiterhin ein dreidimensionales makroporöses Fasernetzwerk. Die Fasern sind hier an den Berührungspunkten kraftschlüssig miteinander verbunden. Das Fasernetzwerk weist vorzugsweise eine Porengröße von 0,5 mm oder mehr auf. Insbesondere eine solch große Porengröße ermöglicht die bevorzugten Eigenschaften des erfindungsgemäßen Komposits. Dabei sollte die Porengröße 5 mm nicht überschreiten, damit ein stabiles Komposit erhalten wird. Das Leervolumen des dreidimensionalen Fasernetzwerkes beträgt vorzugsweise 95 Vol.-% oder mehr, insbesondere 97 Vol.-% oder mehr, besonders bevorzugt 99 Vol.-%.

Das Fasernetzwerk ist beispielsweise ausgewählt aus der Gruppe, die Gewebe, Gewirke, Vliese, Filze und Tuftings umfasst. Diese können beispielsweise aus Polymerfasern bestehen, wie beispielsweise Polyester oder Polyamidfasern. Es ist auch möglich sogenannte BiCo-Fasern einzusetzen, welche aus einem Kern aus einem Material und einer Hülle aus einem davon verschiedenem Material bestehen. Beispielsweise kann es sich hierbei um mit einem Polymer beschichtete Glasfasern handeln. Es ist auch möglich BiCo-Fasern einzusetzen, die aus unterschiedlichen polymeren Materialen bestehen. Vorzugsweise hat hier das Polymer, welche die Hülle bildet, einen geringeren Schmelzpunkt als das Polymer des Kerns. Hierdurch kann ermöglicht werden, dass durch ein leichtes Erwärmen die äußere Hülle sich in ihren Eigenschaften ändert und an den Überschneidungspunkten einzelner Fasern diese miteinander verkleben, so dass eine kraftschlüssige Verbindung an den Berührungspunkten gegeben ist.

Eine kraftschlüssige Verbindung ist somit im Gegensatz zu rein formschlüssigen Verbindungen anzusehen, in welchen Fasern eines Fasernetzwerks an den Berührungspunkten lediglich mechanisch miteinander verbunden sind.

Das Aerogel weist bevorzugt eine Teilchengröße im Bereich von 1 bis 10 $\mu$m, insbesondere von 2 bis 8 $\mu$m, besonders von 4 bis 5,5 $\mu$m auf. Die Größe der Teilchen wird mittels elektronenmikroskopischer Aufnahmen, wie Rasterelektronenmikroskopie (REM) oder Transmissionselektronenmikroskopie (TEM), bestimmt. Der Porendurchmesser beträgt vorzugsweise 15 $\mu$m oder weniger, insbesondere 12 $\mu$m oder weniger und/oder 2 $\mu$m oder mehr, bevorzugt 5 $\mu$m oder mehr. Besonders bevorzugt beträgt der Porendurchmesser etwa 10 $\mu$m.

Die Rohdichte mit Luft beträgt bevorzugt 0,1 g/cm$^3$. Die skeletale Dichte liegt unterhalb der von solidem Quarz

und beträgt bevorzugt 1,8 $g/cm^3$. Überraschenderweise hat sich gezeigt, dass ein Komposit mit besonders guten Eigenschaften erhalten wird, wenn das Aerogel die genannten Teilchengröße, Porendurchmesser und bevorzugt auch Dichte aufweist.

In einer weiteren Ausführungsform wird die der vorliegenden Erfindung zugrundeliegende Aufgabe gelöst durch ein Verfahren zur Herstellung eines flexiblen Aerogel-Komposits, welche die folgenden Schritte umfasst:

a) Hydrolyse wenigstens eines trifunktionellen Silans in destilliertem Wasser,
b) Zugabe wenigstens eines difunktionellen Silans und Hydrolyse der beiden Silane, wodurch ein Sol erhalten wird,
c) In-Kontakt bringen des Sols mit einem 3-dimensionales makroporöses Fasernetzwerk,
d) Gelation des in Schritt c) erhaltenen Sols unter Ausbildung eines Gels bei einer gegenüber Raumtemperatur erhöhten Temperatur,
e) Austausch von im Gel enthaltenem Lösungsmittel unter Einwirkung von Druck und
f) Trocknung zum Erhalt des flexiblen Komposits.

Dabei wird erfindungsgemäß zunächst das trifunktionelle Silan hydrolysiert, welches diesbezüglich eine langsamere Reaktionskinetik als das difunktionelle Silan aufweist. Das erfindungsgemäße Verfahren ermöglicht eine kostengünstige und rasche Herstellung entsprechender Komposit.

Beim Lösungsmittelaustausch in Schritt e) werden nicht reagierte Edukte und entstandene Verunreinigungen (Nebenprodukte) entfernt. Der Austausch kann beispielsweise dadurch erfolgen, dass das in Schritt c) erhaltene Gel in frisches Lösungsmittel gelegt wird. Durch Ausübung von Druck, also durch Kompression wird altes Lösungsmittel aus dem Gel gedrückt. Anschließend erholt sich in diesem Fall die Struktur elastisch und saugt sich mit frischem Lösungsmittel voll, wie dies beispielsweise auch bei einem nanoporösen Schwamm zu beobachten wäre.

Überraschenderweise hat sich gezeigt, dass ein erfindungsgemäßes Komposit auch im nassen Zustand stabil ist. Dies ermöglicht einerseits eine flexible Handhabe, unabhängig von Größe und Geometrie des Komposits aber auch einen raschen Lösungsmittelaustausch, der nun nicht mehr diffusionsbasiert abläuft. Dies führt zu einer deutlichen Zeitersparnis bei der Herstellung. Auf Grund der Zug- und Scherfestigkeit des erfindungsgemäßen Komposits auch im nassen Zustand ist es möglich den Druck so auszuüben, dass auch Zug- und/oder Scherkräfte einwirken, um einen raschen Lösungsmittelaustausch zu ermöglichen.

Für ein verbessertes Waschergebnis kann das Gel auch nacheinander in unterschiedlichen Lösungsmitteln gewaschen werden. Aufgrund der kurzen Zeitdauer, die der Lösungsmittelaustausch erfindungsgemäß benötigt, können verbesserte Aerogele erhalten werden, da hierdurch gezielter nicht reagierte Edukte oder entstandene Verunreinigungen aus der nanoporösen Struktur entfernt werden können. So kann beispielsweise zunächst Wasser als Lösungsmittel eingesetzt werden, das heißt das Gel wird in Wasser gelegt und hier mehrmals ausgedrückt. Anschließend kann das Gel beispielsweise in einem organischen Lösungsmittel, beispielsweise Ethanol, Methanol, Isopropanol oder Aceton, gewaschen werden, um organische Verunreinigungen zu entfernen. Insgesamt kann die für den Lösungsmittelaustausch benötigte Zeit auf Minuten oder wenige Stunden, je nach Größe des Komposits, reduziert werden. Da die organischen Lösungsmittel zum gleichen Ergebnis führen, wird bevorzugt Ethanol als organisches Lösungsmittel eingesetzt, da diese kostengünstig und einfach in der Handhabung ist.

Ist das Silica-Aerogel nicht nur aus einem difunktionellen Silan und einem trifunktionellen Silan, sondern auch aus einem tetrafunktionellen Silan gebildet, wird zunächst das tetrafunktionelle Silan hydrolysiert und anschließend zunächst das trifunktionelle Silan und erst dann das difunktionelle Silan in die Reaktionsmischung gegeben. Auch diese Reihenfolge ergibt sich auf Grund der Reaktionskinetik. So wird zunächst das Silan zur Hydrolyse gebracht, welches die langsamste Reaktionskinetik im Hinblick auf die Hydrolyse aufweist, und zuletzt das Silan mit der schnellsten Reaktionskinetik.

Vorzugsweise gibt man in Schritt a) weiterhin Harnstoff hinzu. Durch die Zugabe von Harnstoff kann die Reaktionsgeschwindigkeit der stattfindenden Kondensationsreaktion eingestellt werden. Es wird jedoch auch das mechanische Verhalten des flexiblen Komposits beziehungsweise zunächst des Aerogels beeinflusst. Vorzugsweise gibt man Harnstoff in einem Anteil von 20 bis 50 Gew.-%, insbesondere von 30 bis 45 Gew.-% hinzu, wobei 100 Gew.-% das Gesamtgewicht des nassen Gels darstellen. Die Flexibilität des erfindungsgemäßen Komposits nimmt mit steigendem Harnstoffgehalt zu, da hierdurch die Mikrostruktur des Aerogels dahingehend beeinflusst wird, dass homogene Partikelhälse, eine ebene Gestalt und eine verbesserte Stabilität erhalten werden.

Gibt man mehr als 50 Gew.-% an Harnstoff in die Lösung, so erfolgt die Reaktion zwar sehr schnell, die Flexibilität wird jedoch nachteilig beeinflusst. Verwendet man weniger als 20 Gew.-% an Harnstoff, so kann ein inhomogenes Sol und damit ein inhomogenes Gel und ein inhomogenes Aerogel erhalten werden.

Bevorzugt wird in dem erfindungsgemäßen Verfahren zwischen den Schritten a) und b) weiterhin ein Tensid zugegeben. Das Tensid verbessert die Mischbarkeit der Silane mit dem Wasser. Somit wird ein gleichmäßiges Netzwerk beziehungsweise die Ausgestaltung eines gleichmäßigen Netzwerks in der Lösung ermöglicht. Vorzugsweise wird ein Tensid in einem Anteil von etwa 5 Gew.-% hinzugegeben. Gibt man weniger als 5 Gew.-% hinzu, so ist kein Einfluss

auf die Löslichkeit der Silane festzustellen. Ein Mehr an Tensid führt zu keiner Verbesserung, erhöht jedoch die Kosten des Herstellungsverfahrens. Vorzugsweise handelt es sich bei dem Tensid um CTAC, welches insbesondere als verdünnte Lösung eingesetzt wird.

Die Gelation des Sols (Schritt d des erfindungsgemäßen Verfahrens) erfolgt bei gegenüber Raumtemperatur erhöhter Temperatur. Die Gelation kann beispielsweise in einem Ofen bei einer Temperatur im Bereich von 70 °C bis 100 °C erfolgen. Hierdurch kann die Gelation beschleunigt werden. Bei zu hohen Temperaturen wird eine homogene Aerogel-Struktur nicht immer erreicht. Bei geringen Temperaturen ist der Zeitbedarf für eine vollständige Gelation sehr lang. Bei einer Temperatur von 70 °C bis 100 °C beträgt die Dauer etwa 2 bis 28 Stunden.

Nach der Gelation und vor dem Austausch der Lösungsmittel kann das Gel über einen Zeitraum von 2 bis 48 Stunden bei einer Temperatur im Bereich von 20 bis 100 °C, üblicherweise bei etwa 80 °C, gealtert werden.

Die abschließende Trocknung kann sowohl überkritisch (Lösungsmittelextraktion mit überkritischem Fluid) als auch unterkritisch erfolgen.

Überraschenderweise hat sich gezeigt, dass das erfindungsgemäße Komposit ebenso temperaturstabil ist wie Aerogele. Limitierender Faktor ist hier die Wahl des Materials für das Fasernetzwerk. Durch die geeignete Materialauswahl besteht somit die Möglichkeit die Materialeigenschaften den gegebenen Bedingungen anzupassen.

Es hat sich jedoch gezeigt, dass auch bei solchen Temperaturen, bei denen das Fasernetzwerk pyrolysiert, die flexiblen Eigenschaften des Komposits erhalten bleiben. Lediglich die Zugfestigkeit geht in Abhängigkeit des Grads der Pyrolyse verloren. Zudem weist das erfindungsgemäße Komposit eine hohe Formstabilität auf, die auch bei hohen Temperaturen nicht verloren geht.

Die flexiblen Eigenschaften bleiben auch bei hohen Temperaturen erhalten, wodurch die Verwendung als Dämmmaterial ermöglicht wird. Auf Grund der Flexibilität bleibt beispielsweise auch in gebogenem Zustand die Dämmwirkung gleichmäßig über einen langen Zeitraum erhalten. So ist beispielsweise eine Wärmedämmung von Rohren mit Hilfe des erfindungsgemäßen Komposits möglich. Auch die akustischen Dämmeigenschaften des erfindungsgemäßen Komposits entsprechen denen von Aerogelen. Entsprechen können die Komposits zur akustischen Dämmung beispielsweise in Schienenfahrzeugen, Kraftfahrzeugen, Flugzeugen oder ähnlichen eingesetzt werden.

In den nachfolgenden Ausführungsbeispielen wird die vorliegende Erfindung exemplarisch erläutert.

Ausführungsbeispiele:

Beispiel 1: Herstellung eines erfindungsgemäßen Komposits

a) Solherstellung:

Für die Herstellung des Sols wurden die aufgeführten Edukte [MTMS]:[DMDMS]:[$C_2H_4O_2$]:[$H_2O$]:[UREA]:[CTAC] im folgenden Molverhältnis [1]:[0,67]:[$4\times10^{-3}$]:[39,65]: [3,97]: [0,15] eingesetzt.

MTMS: Methyltrimethoxysilan
DMDMS: Dimethyldimethoxysilan
UREA: Harnstoff
CTAC: Tensid (Cetyltrimethylammoniumchlorid)

In einem verschließbaren Becher wurde das Urea in destilliertem Wasser unter Rühren aufgelöst. Anschließend wurde mit Eisessig die Lösung auf den gewünschten pH von $\leq$3,5 gebracht. Nun erhielt die Lösung den ersten Silanprekursor (MTMS) zur Hydrolyse und im Anschluss das Tensid (CTAC). Dieser Prozess dauerte 15 min. Danach wurde der zweite Silanprekursor (DMDMS) hinzugegeben. Auch dieser wurde in der Lösung hydrolysiert. Die Dauer betrug hier 45 min.

b) Imprägnation:

Die Fasermatrix und das Sol wurden miteinander in Kontakt gebracht (die Fasermatrix wurde mit fertigem Sol imprägniert); als Fasermatrix wurden Faservliese aus Polyester eingesetzt. Diese wiesen eine durchschnittliche Porengröße von 1,25mm auf.

c) Kondensation:

Die zuvor erhaltene Struktur wurde in einem Ofen bei Temperaturen von 70 bis 100°C gelagert. Die Gelation des Sols trat innerhalb von 24 Stunden ein.

d) Alterung:

Das erhaltene Gel wurde zwischen 2 und 48 Stunden bei gegenüber Raumtemperatur erhöhter Temperatur (vorliegend 80 °C) gealtert.

e) Lösungsmittelaustausch:

Das Gel wurde in frisches Lösungsmittel gelegt. Durch Kompression wurde altes Lösungsmittel aus dem Gel gedrückt. Anschließend erholte sich die Struktur elastisch und saugte sich mit frischem Lösungsmittel voll (ähnlich einem nanoporösen Schwamm). Für verbessertes Waschergebnis wurde das Gel zuerst einige Male in Wasser und anschließend in organischem Lösungsmittel (Ethanol) gewaschen.

f) Trocknung:

Das Gel wurde unterkritisch in einem Ofen bei Atmosphärendruck und bei Temperaturen zwischen 20 bis 160°C getrocknet.

In Fig. 3 ist eine Rasterelektronenmikroskopische Aufnahme (REM) eines erfindungsgemäßen Komposits gezeigt. Hier lässt sich erkennen, dass eine Verbindung zwischen Aerogel und den Fasern des Vlieses besteht. Die Bindung des Aerogels an das Faservlies führt bei mechanischer Belastung zu einer guten Kraftübertragung von Aerogel auf die Faser und somit zur Stärkung des Verbundes.

Beispiel 2: Thermische Stabilität von flexiblen Aerogelen mit unterschiedlichen Anteilen von tetrafunktionellen Silanen

In Fig. 4 ist eine Rasterelektronenmikroskopische Aufnahme (REM) eines flexiblen Aerogels, welches aus di- und trifunktionellem Silanen besteht, gezeigt.

Mittels thermogravimetrischer Analyse wurde der Einfluss von tetrafunktionellen Silanen, welche bei der Herstellung des Aerogels eingesetzt werden, auf die thermische Stabilität hin untersucht.

Hierfür wurden zunächst Messungen an verschiedenen MTMS/DMDMS - Systemen (di- und trifunktionellen Silanen) mit unterschiedlichen Anteilen an tetrafunktionellem Silanen durchgeführt, um die thermische Stabilität ohne die Auswirkung von Faservlies zu untersuchen.

Die thermogravimetrische Analyse, kurz TGA, dient zur Bestimmung der Zersetzung von Materialien in Abhängigkeit von Zeit und Temperatur. Das verwendete Gerät Typ TG 209 F1 aus dem Hause Netzsch enthält einen Ofen, in dem sich eine Mikrowaage befindet. Die Proben wurden in einem Tiegel aus $Al_2O_3$ gelegt und auf die Mikrowaage platziert. Unter inerter Atmosphäre wurden die Proben bei einer Heizrate von 10K/min von 25°C auf 1000°C pyrolysiert. Aufgrund der Pyrolyse verliert die Probe an Gewicht, welches die Mikrowaage misst.

In Fig.5 sind die jeweiligen thermogravimetrische Analysen von Proben mit unterschiedlichen Anteilen an tetrafunktionellen Silanen festgehalten. Die x-Achse gibt die Temperatur an und die y-Achse das relative Gewicht in % wieder (TG% das Gewicht ist zu Anfang 100%).

Die gestrichelte Linie in Fig. 5 zeigt die Ergebnisse für ein flexibles Aerogel, welches aus 60 mol% MTMS und 40 mol% DMDMS hergestellt wurde. Die Angaben in mol% beziehen sich hier und im Folgenden auf die gesamte Stoffmenge an Silan. Der schlagartige Masseverlust erfolgte hier bei etwa 400°C, wobei sich $CO_2$ und andere niedermolekulare organische Verbindungen abspalten. Die Restmasse betrug hier 13%.

Die gepunktete Kurve in Fig. 5 zeigt das Ergebnis für ein flexibles Aerogel, welches aus 54 mol% MTMS, 36 mol% DMDMS und 10 mol% TEOS (tetrafunktionelles Silan) hergestellt wurde. Dieses Material besitzt weniger organische Kohlenstoffverbindungen, dafür aber mehr Anteil an tetrafunktionellem Silan. Dies erhöht die thermische Stabilität. Die Restmasse betrug bei dieser Probe etwa 60%. Darüber hinaus war hier kein ausgeprägter schlagartiger Masseverlust bei 400°C zu beobachten, wie bei der Probe ohne tetrafunktionelles Silan zu erkennen war.

Die Messergebnisse für ein flexibles Aerogel, welches aus 30 mol% TEOS (tetrafunktionelles Silan), 44 mol% MTMS und 26 mol% DMDMS hergestellt wurde, sind mittels der durchgezogenen Kurve in Fig. 5 dargestellt. Hier betrug die Restmasse rund 70%. Der schlagartige Masseverlust lag bei einer gegenüber den anderen Proben höheren Temperatur (550°C) und war weniger ausgeprägt als bei der Probe mit 10 mol% TEOS.

Wie aus Fig. 5 erkennbar, ermöglicht das tetrafunktionelle Silan TEOS (Tetraethoxysilan) die Herstellung von flexiblen Aerogelen mit einer besonders hohen thermischen Stabilität. Dabei hat sich gezeigt, dass flexible Aerogele, bei welchen in der Herstellung 30mol% oder mehr an TEOS eingesetzt wird, zwar eine hohe thermische Stabilität aufweisen, deren Flexibilität jedoch deutlich eingeschränkt ist, ebenso wie die Scher- und Zugfestigkeit.

Es lässt sich feststellen, dass je höher der Anteil an tetrafunktionellen Silanen ist, die thermische Stabilität erhöht wird. Dies kann man erstens an den verbleibenden Restmassen ableiten (13%, 59%, 70%) und zweitens an den Temperaturen an dem der schlagartige Masseverlust auftaucht, feststellen.

Beispiel 3: Thermische Stabilität des Komposits, wie in Beispiel 1 beschrieben.

Das Komposit bestand, wie in Beispiel 1 erläutert, aus Polyesterfaservlies mit flexiblen Silica-Aerogelen, welches aus di- und trifunktionellem aber ohne Anteilen an tetrafunktionellen Silanen besteht. Mit Hilfe der Messungen wurde die thermische Stabilität des Komposits untersucht.

Hierfür wurde eine Probe einer linearen Temperaturerhöhung unterworfen. Die Messung startete bei 25 °C. Bei einem Temperaturanstieg von 10 °C/min erfolgte eine Erwärmung bis auf eine Maximaltemperatur von 1000 °C. Das Ergebnis der Messung ist in Fig. 6 gezeigt.

Bei einem Temperaturbereich zwischen 100 °C und 200 °C erfolgt ein erster Masseverlust. Dieser ist auf die Desorption von physikalisch gebundenem Wasser zurück zu führen.

Ein deutlicher Masseverlust tritt bei einer Temperatur ab 350 °C ein. Dieser deutet auf eine abspaltende Umsetzung der Methylgruppen in Form von $CO_2$ hin.

Bis zu der Temperatur von 350 °C weist das Komposit einen Masseverlust von lediglich 2,6 % auf. Ab 400 °C gibt es einen schlagartigen Masseverlust. Diese Temperatur ist in Einklang mit der verwendeten Fasermatrix, wobei das Aerogel selbst auch bei deutlich höheren Temperaturen stabiler ist. Das vorliegende Komposit ist somit bis zu einer Temperatur von 350 °C als thermisch stabil anzusehen.

Durch die Wahl von geeignetem und temperaturstabilerem Faservlies und bei der Verwendung eines Aerogels, welches aus bis zu 10 mol% tetrafunktionellem Silan hergestellt wurde, kann die Temperaturstabilität des gesamten Komposits an die Bedürfnisse der jeweiligen Verwendung eingestellt und gegenüber dem hier verwendeten Komposit erhöht werden.

Beispiel 4: TGA

Eine Probe des in Beispiel 1 hergestellten Komposits wurde erneut einer TGA unterzogen. Diesmal wurde der Einfluss von Temperatur über einen längeren Zeitraum untersucht. Hierfür wurde die Temperatur jeweils etwa eine Stunde gehalten. Das Ergebnis ist in Fig. 7 gezeigt.

Wie hier erkennbar ist, wurde das Komposit zunächst auf 100 °C erwärmt und diese Temperatur für eine Stunde gehalten. In diesem Zeitraum erfolgte ein Masseverlust von 0,55 %. Anschließend wurde mit einem Temperaturanstieg von 10 °C/min die Temperatur auf 200 °C erhöht und erneut eine Stunde gehalten. In Summe trat hier ein Masseverlust von 0,93 % auf.

Anschließend wurde erneut mit einem Temperaturanstieg von 10 °C/min die Temperatur erhöht. Die dann erreichten 300 °C wurden erneut für eine Stunde gehalten, bevor mit demselben Anstieg eine Temperatur von 400 °C eingestellt wurde. Nach der Temperaturbelastung bei 300 °C betrug der Masseverlust 1,71 %, nach insgesamt 3,5 Stunden und einer Temperaturerhöhung auf 400 °C wurde ein Masseverlust von 4,6 % beobachtet.

Auch hier konnte somit eine zeitabhängige thermische Stabilität beobachtet werden.

Beispiel 5: Pyrolyse

Eine Probe, welche gemäß Beispiel 1 hergestellt wurde, wurde bei 350 °C für 2 Stunden pyrolysiert.

Die Probe wies vor der Pyrolyse eine Höhe von 1,5 cm, eine Breite von 4,8 cm, eine Länge von 19,6 cm, eine Gewicht von 12,5 Gramm, ein Volumen von 141,12 $cm^3$ und eine Dichte von 0,09 $g/cm^3$ auf.

Nach der Pyrolyse wurde die Probe langsam über mehrere Stunden abgekühlt. Die Probe wies nach der Pyrolyse eine Höhe von 1,5 cm, eine Breite von 4,5 cm, eine Länge von 19,5 cm, eine Gewicht von 11,48 Gramm, ein Volumen von 131,63 $cm^3$ und eine Dichte von 0,09 $g/cm^3$ auf. Optisch war die Oberfläche leicht braun, während sie vor der Pyrolyse weiß war. Die Flexibilität blieb erhalten. Lediglich die Zugfestigkeit wurde negativ beeinflusst und war nicht mehr präsent. Dies ist vermutlich darauf zurückzuführen, dass das eingesetzte Fasernetzwerk bei 350 °C nicht mehr thermisch stabil war. Setzt man hier jedoch solche Fasernetzwerke ein, die auch bei diesen Temperaturen nicht pyrolisieren, ist eine Zugfestigkeit auch weiterhin gegeben.

## Patentansprüche

**1.** Flexibles Aerogel-Komposit, umfassend

ein Silica-Aerogel, gebildet aus wenigstens einem difunktionellen Silan und wenigstens einem trifunktionelles Silan, und
ein 3-dimensionales makroporöses Fasernetzwerk, in dem die Fasern an den Berührungspunkten kraftschlüssig miteinander verbunden sind, wobei das Fasernetzwerk eine Porengröße von 0,5 mm oder mehr aufweist.

2. Komposit nach Anspruch 1, **dadurch gekennzeichnet, dass** das Aerogel weiterhin aus einem tetrafunktionellen Silan gebildet ist.

3. Komposit nach Anspruch 1 oder 2, **dadurch gekennzeichnet, dass** das Stoffmengenverhältnis von trifunktionellem Silan zu difunktionellem Silan im Bereich von 2:1 bis 1:1 liegt.

4. Komposit nach einem der Ansprüche 1 bis 3, **dadurch gekennzeichnet, dass** das Fasernetzwerk ausgewählt ist aus der Gruppe, die Gewebe, Gewirke, Vliese, Filze und Tuftings umfasst.

5. Verfahren zur Herstellung eines flexiblen Aerogel-Komposits nach Anspruch 1 umfassend die folgenden Schritte:

   a) Hydrolyse wenigstens eines trifunktionellen Silans in destilliertem Wasser,
   b) Zugabe wenigstens eines difunktionellen Silans und Hydrolyse der beiden Silane, wodurch ein Sol erhalten wird,
   c) In-Kontakt bringen des Sols mit einem 3-dimensionales makroporöses Fasernetzwerk,
   d) Gelation des in Schritt c) erhaltenen Sols unter Ausbildung eines Gels bei einer gegenüber Raumtemperatur erhöhten Temperatur,
   e) Austausch von im Gel enthaltenem Lösungsmittel unter Einwirkung von Druck und
   f) Trocknung zum Erhalt des flexiblen Komposits.

6. Verfahren nach Anspruch 5, **dadurch gekennzeichnet, dass** Schritt a) die folgenden Schritte umfasst:

   a1) Hydrolyse wenigstens eines tetrafunktionellen Silans in destilliertem Wasser und anschließende
   a2) Zugabe wenigstens eines trifunktionellen Silans und Hydrolyse der beiden Silane.

7. Verfahren nach Anspruch 5 oder 6, **dadurch gekennzeichnet, dass** man zur Hydrolyse in Schritt a) weiterhin Harnstoff zugibt.

8. Verfahren nach einem der Ansprüche 5 bis 7, **dadurch gekennzeichnet, dass** zwischen den Schritten a) und b) weiterhin ein Tensid zugegeben wird.

## Claims

1. A flexible aerogel composite, comprising

   a silica aerogel formed from at least one difunctional silane and at least one trifunctional silane, and
   a three-dimensional macroporous fiber network in which the fibers are bonded together by a frictional connection at the contact points, wherein said fiber network has a pore size of 0.5 mm or more.

2. The composite according to claim 1, **characterized in that** said aerogel is further formed from a tetrafunctional silane.

3. The composite according to claim 1 or 2, **characterized in that** the molar ratio of said trifunctional silane to said difunctional silane is within a range of from 2:1 to 1:1.

4. The composite according to any of claims 1 to 3, **characterized in that** said fiber network is selected from the group consisting of woven fabrics, knitted fabrics, non-wovens, felts, and tufted fabrics.

5. A process for preparing a flexible aerogel composite according to claim 1, comprising the following steps:

   a) hydrolyzing at least one trifunctional silane in distilled water,
   b) adding at least one difunctional silane, and hydrolyzing the two silanes to obtain a sol,
   c) contacting said sol with a three-dimensional macroporous fiber network,
   d) allowing the sol obtained in step c) to gel, whereby a gel is formed at a temperature above room temperature,
   e) exchanging the solvent contained in the gel with application of pressure, and
   f) drying to obtain the flexible composite.

6. The process according to claim 5, **characterized in that** step a) includes the following steps:

a1) hydrolyzing at least one tetrafunctional silane in distilled water, followed by
a2) adding at least one trifunctional silane, and hydrolyzing the two silanes.

**7.** The process according to claim 5 or 6, **characterized in that** the hydrolysis in step a) further includes the addition of urea.

**8.** The process according to any of claims 5 to 7, **characterized in that** a surfactant is further added between steps a) and b).

## Revendications

**1.** Composite d'aérogel flexible, comprenant

un aérogel de silice formé à partir d'au moins un silane difonctionnel et d'au moins un silane trifonctionnel, et un réseau de fibres macroporeux tridimensionnel, dans lequel les fibres sont mutuellement reliées par adhérence aux points de contact, dans lequel ledit réseau de fibres présente une taille des pores qui est 0,5 mm ou plus.

**2.** Composite selon la revendication 1, **caractérisé en ce que** ledit aérogel est formé en outre à partir d'un silane tétrafonctionnel.

**3.** Composite selon la revendication 1 ou 2, **caractérisé en ce que** le rapport molaire du silane trifonctionnel au silane difonctionnel est compris dans la gamme de 2 : 1 à 1 : 1.

**4.** Composite selon l'une quelconque des revendications 1 à 3, **caractérisé en ce que** ledit réseau de fibres est choisi dans le groupe consistant en tissus, tricots, voiles, feutres, et tapis tuftés.

**5.** Procédé pour fabriquer un composite d'aérogel flexible selon la revendication 1, comprenant les étapes consistant à

a) hydrolyser au moins un silane trifonctionnel dans de l'eau distillée,
b) ajouter au moins un silane difonctionnel, et hydrolyser les deux silanes pour obtenir un sol,
c) mettre ledit sol en contact avec un réseau de fibres macroporeux tridimensionnel,
d) faire geler ledit sol obtenu dans l'étape c) pour former un gel à une température élevée par rapport à la température ambiante,
e) échanger le solvant contenu dans le gel avec l'application de pression, et
f) sécher pour obtenir le composite flexible.

**6.** Procédé selon la revendication 5, **caractérisé en ce que** l'étape a) comprend les étapes suivantes consistant à

a1) hydrolyser au moins un silane tétrafonctionnel dans de l'eau distillée, et ensuite
a2) ajouter au moins un silane trifonctionnel, et hydrolyser les deux silanes.

**7.** Procédé selon la revendication 5 ou 6, **caractérisé en ce que** de l'urée est ajouté en outre pour l'hydrolyse dans l'étape a).

**8.** Procédé selon l'une quelconque des revendications 5 à 7, **caractérisé en ce que** un tensioactif est ajouté en outre entre les étapes a) et b).

Fig. 1

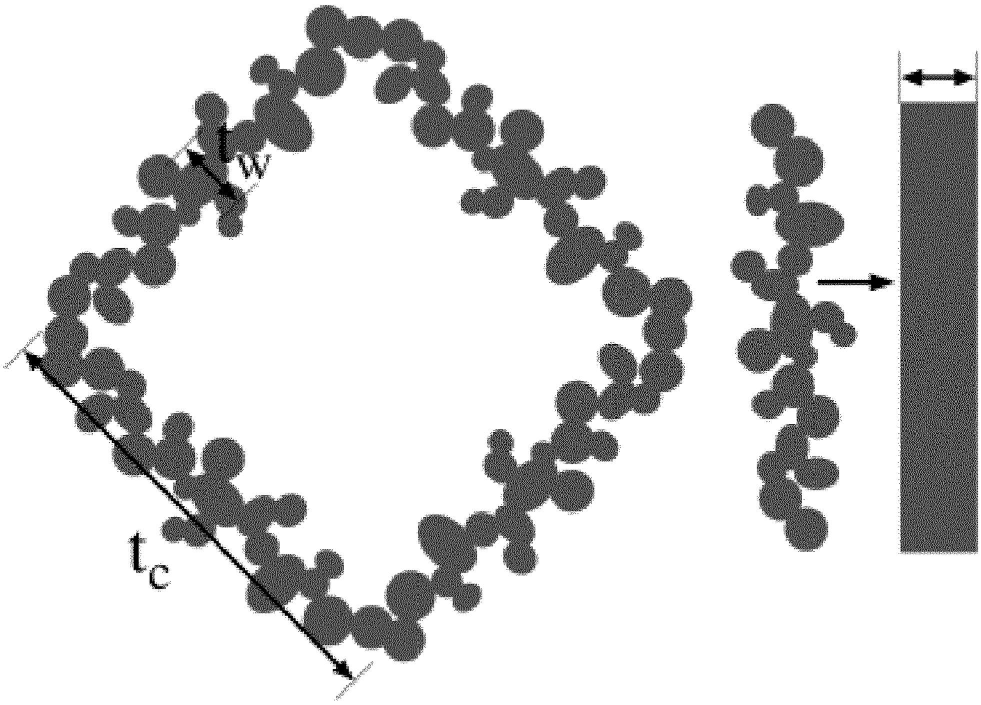

Fig. 2

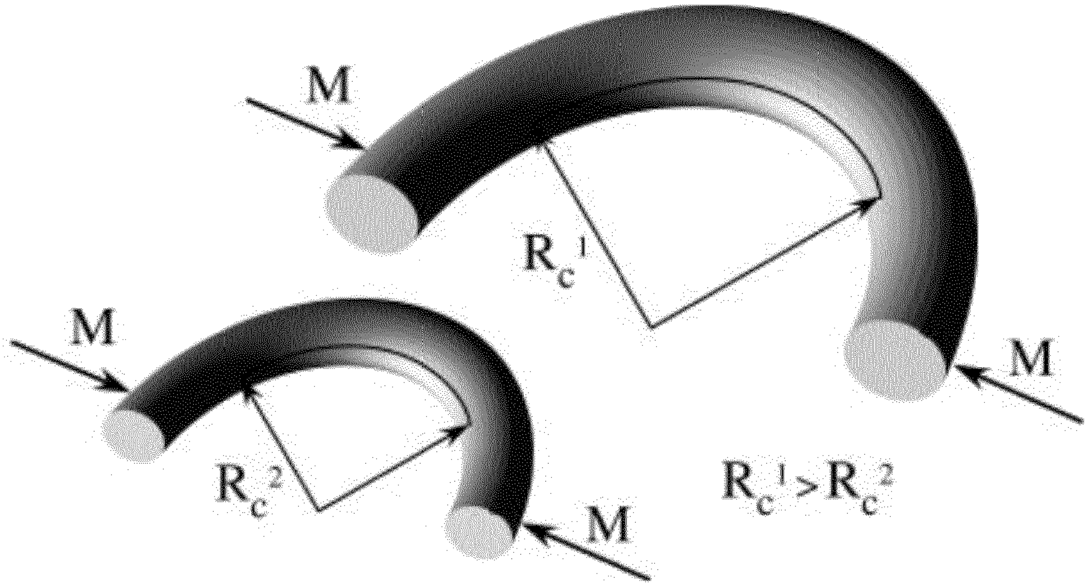

Fig. 3

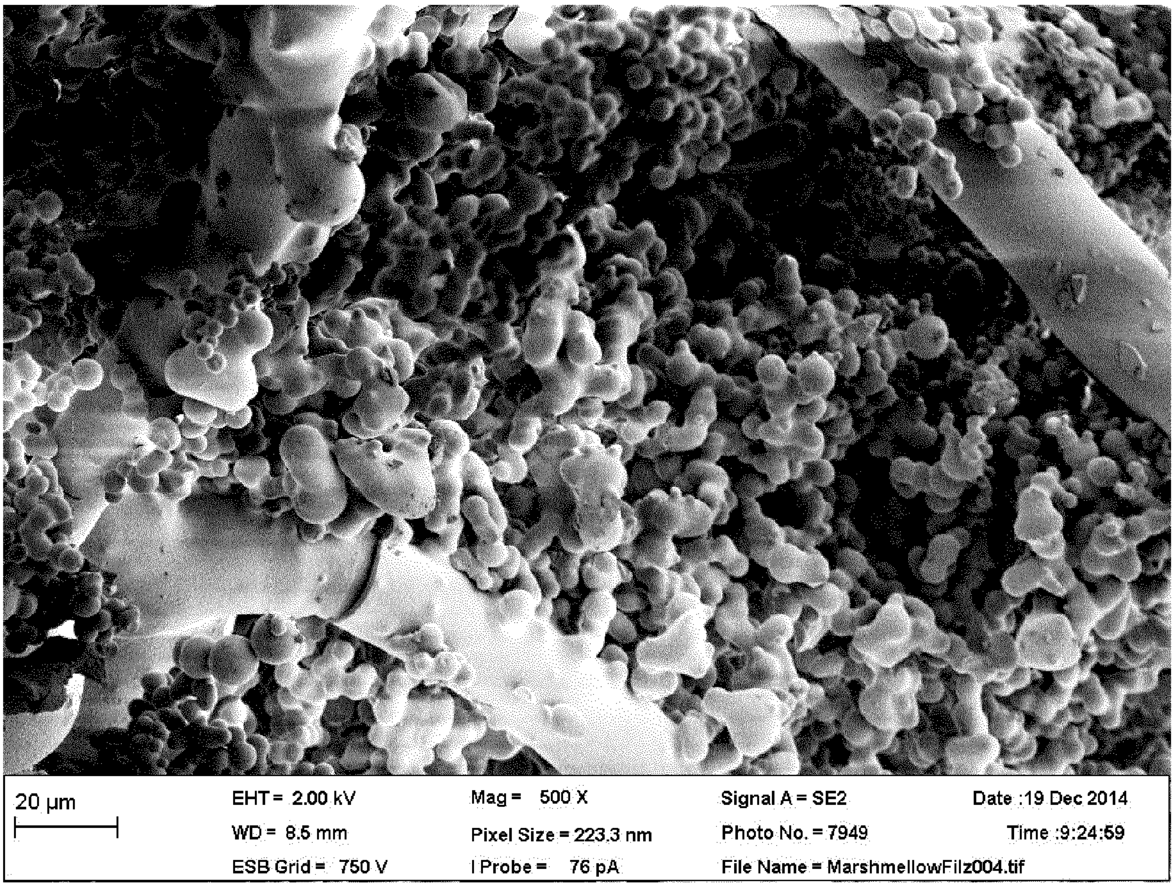
20 µm
EHT = 2.00 kV
WD = 8.5 mm
ESB Grid = 750 V
Mag = 500 X
Pixel Size = 223.3 nm
I Probe = 76 pA
Signal A = SE2
Photo No. = 7949
File Name = MarshmellowFilz004.tif
Date :19 Dec 2014
Time :9:24:59

Fig. 4:

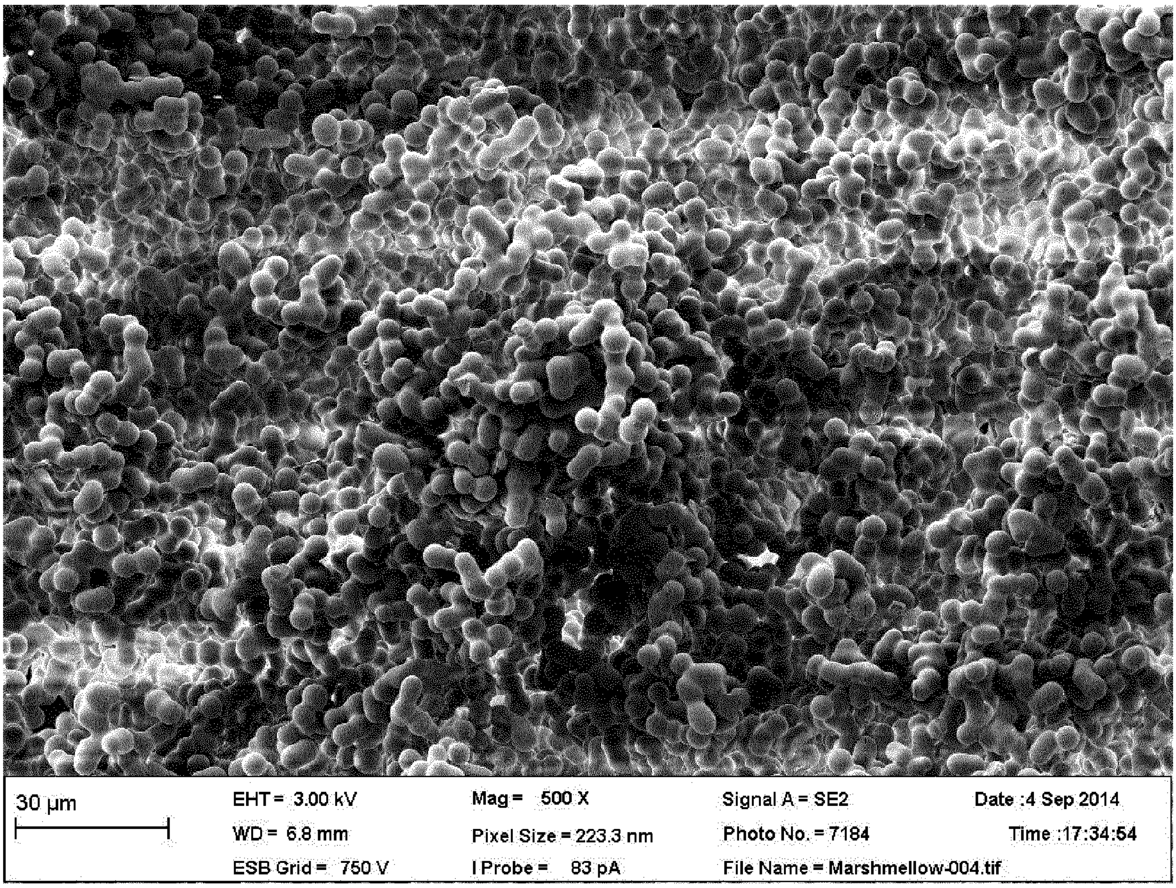
30 µm
EHT = 3.00 kV
WD = 6.8 mm
ESB Grid = 750 V
Mag = 500 X
Pixel Size = 223.3 nm
I Probe = 83 pA
Signal A = SE2
Photo No. = 7184
File Name = Marshmellow-004.tif
Date :4 Sep 2014
Time :17:34:54

Fig. 5:

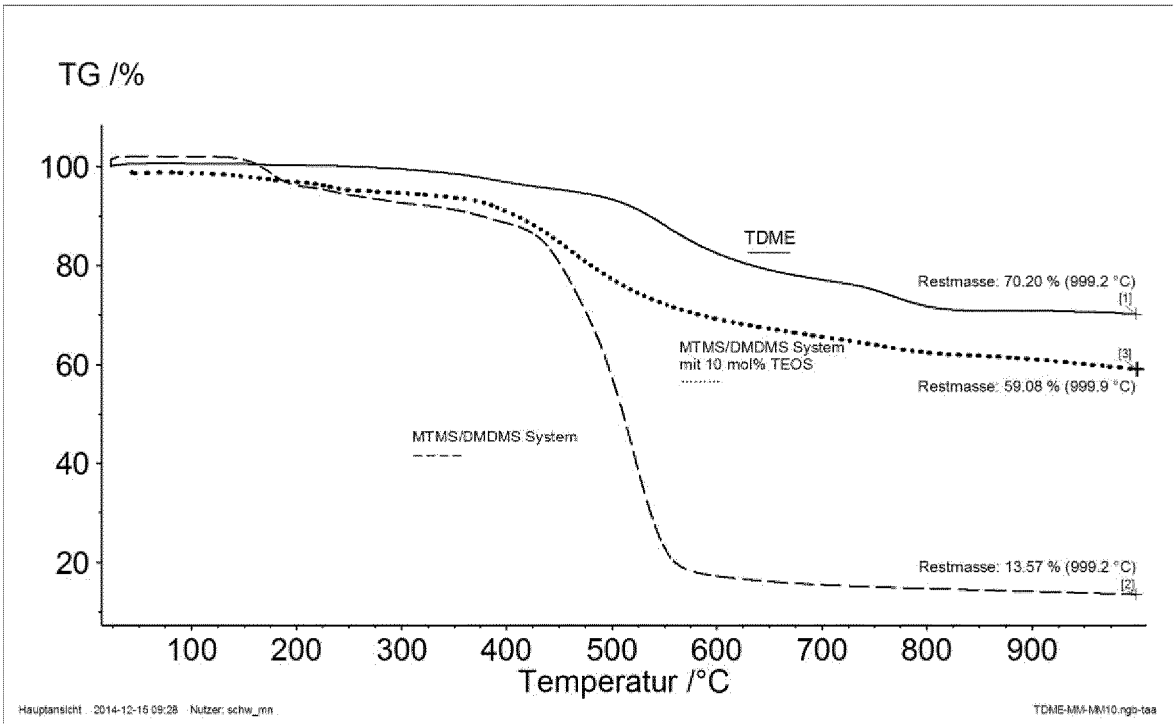


| [#] Gerät | Datei | Datum | Versuchs-ID | Probe | Masse/mg | Segment | Bereich | Atmosphäre | Korr. |
|---|---|---|---|---|---|---|---|---|---|
| [1] TG 209F1 | TDME.ngb-st3 | 2014-02-24 | TDME | TDME | 6.1759 | 1/1 | 20/10.0(K/min)/1000 | Ar, 20.0ml/min / Ar, 20.0ml/min | E00 |
| [2] TG 209F1 | Marschmallow.ngb-st3 | 2014-04-06 | MARSCHMALLOW | MARSCHMALLOW | 11.3284 | 1/1 | 20/10.0(K/min)/1000 | Ar, 20.0ml/min / Ar, 20.0ml/min | E00 |
| [3] TG 209F1 | Marshmallow 10 TEOS.ngb-st3 | 2014-10-22 | Marshmallow 10 TEOS | Silber2014 | 6.2940 | 1/1 | 45/10.0(K/min)/1000 | Ar, 20.0ml/min / Ar, 20.0ml/min | E00 |

*Erzeugt mit NETZSCH Proteus Software*

Fig. 6:

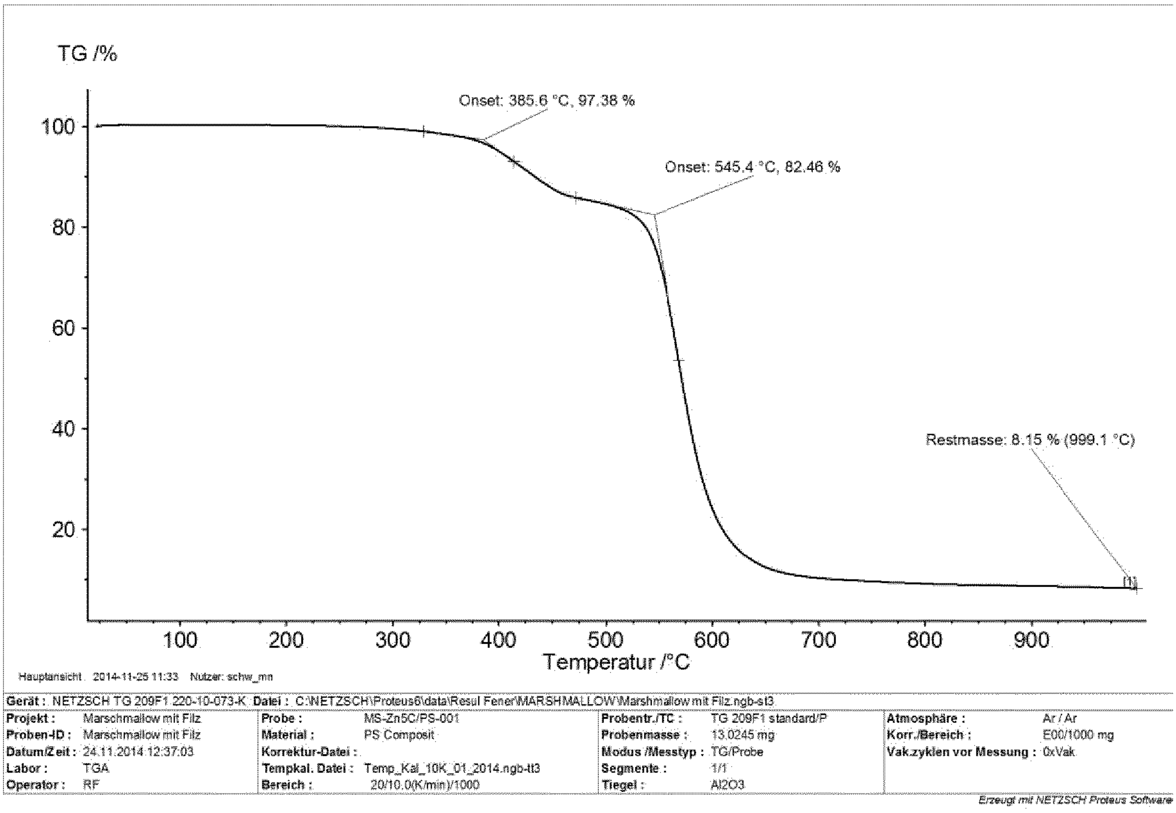
TG /%
100
80
60
40
20
Onset: 385.6 °C, 97.38 %
Onset: 545.4 °C, 82.46 %
Restmasse: 8.15 % (999.1 °C)
100
200
300
400
500
600
700
800
900
Temperatur /°C
Hauptansicht 2014-11-25 11:33 Nutzer: schw_mn
Gerät : NETZSCH TG 209F1 220-10-073-K Datei : C:\NETZSCH\Proteus6\data\Resul Fener\MARSHMALLOW\Marshmallow mit Filz.ngb-st3
Projekt : Marschmallow mit Filz
Proben-ID : Marschmallow mit Filz
Datum/Zeit : 24.11.2014 12:37:03
Labor : TGA
Operator : RF
Probe : MS-Zn5C/PS-001
Material : PS Composit
Korrektur-Datei :
Tempkal. Datei : Temp_Kal_10K_01_2014.ngb-tt3
Bereich : 20/10.0(K/min)/1000
Probentr./TC : TG 209F1 standard/P
Probenmasse : 13.0245 mg
Modus /Messtyp : TG/Probe
Segmente : 1/1
Tiegel : Al2O3
Atmosphäre : Ar / Ar
Korr./Bereich : E00/1000 mg
Vak.zyklen vor Messung : 0xVak
Erzeugt mit NETZSCH Proteus Software

Fig. 7:

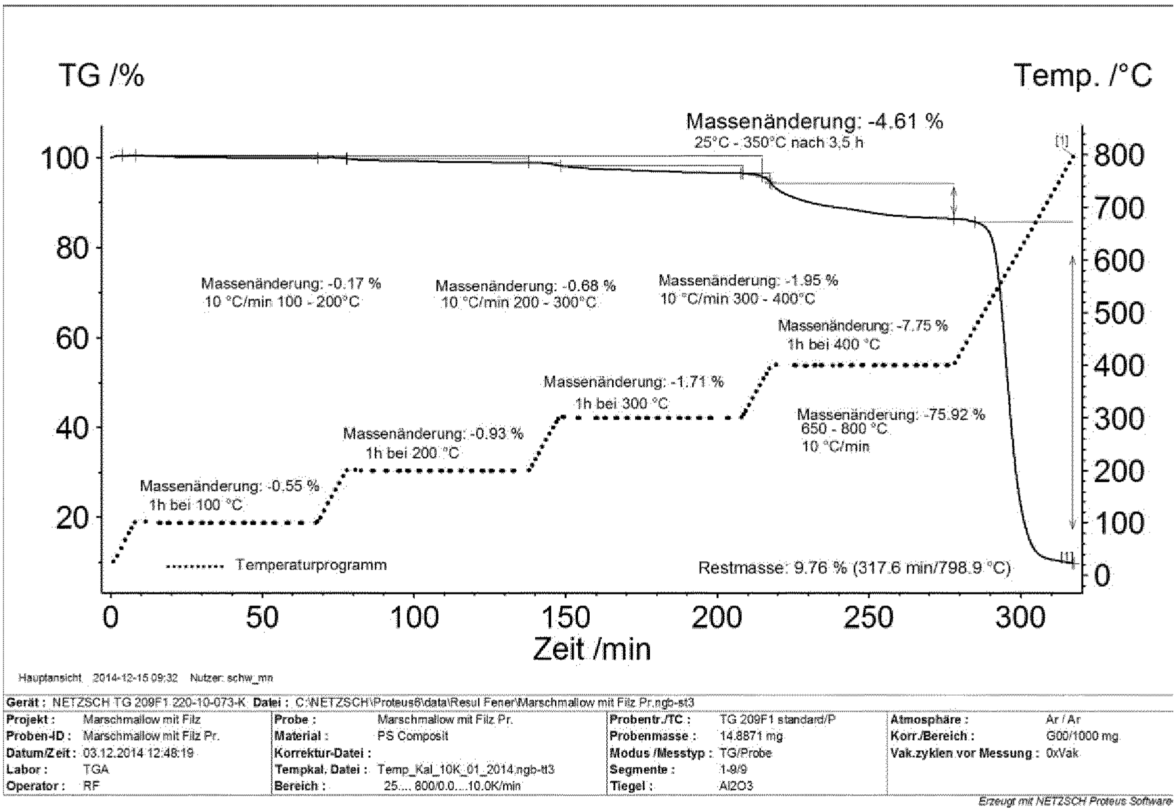
TG /%
Temp. /°C
Massenänderung: -4.61 %
25°C - 350°C nach 3,5 h
Massenänderung: -0.17 %
10 °C/min 100 - 200°C
Massenänderung: -0.68 %
10 °C/min 200 - 300°C
Massenänderung: -1.95 %
10 °C/min 300 - 400°C
Massenänderung: -7.75 %
1h bei 400 °C
Massenänderung: -1.71 %
1h bei 300 °C
Massenänderung: -0.93 %
1h bei 200 °C
Massenänderung: -0.55 %
1h bei 100 °C
Massenänderung: -75.92 %
650 - 800 °C
10 °C/min
Temperaturprogramm
Restmasse: 9.76 % (317.6 min/798.9 °C)
Zeit /min
Hauptansicht 2014-12-15 09:32 Nutzer: schw_mn
Gerät: NETZSCH TG 209F1 220-10-073-K Datei: C:\NETZSCH\Proteus6\data\Resul Fener\Marschmallow mit Filz Pr.ngb-st3
Projekt: Marschmallow mit Filz
Proben-ID: Marschmallow mit Filz Pr.
Datum/Zeit: 03.12.2014 12:48:19
Labor: TGA
Operator: RF
Probe: Marschmallow mit Filz Pr.
Material: PS Composit
Korrektur-Datei:
Tempkal. Datei: Temp_Kal_10K_01_2014.ngb-tt3
Bereich: 25.... 800/0.0....10.0K/min
Probentr./TC: TG 209F1 standard/P
Probenmasse: 14.8871 mg
Modus /Messtyp: TG/Probe
Segmente: 1-9/9
Tiegel: Al2O3
Atmosphäre: Ar / Ar
Korr./Bereich: G00/1000 mg
Vak.zyklen vor Messung: 0xVak
Erzeugt mit NETZSCH Proteus Software

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5789075 A


### In der Beschreibung aufgeführte Nicht-Patentliteratur


- Superhydrophobic and Flexible Aerogels. **A. V. RAU et al.** Aerogels Handbook, Advances in Sol Gel derived materials and technologies. Springer Science and Business Media, 2011
- **GEN HAYASE et al.** Facile Synthesis of Marshmallow-like Macroporous Gels Usable under Harsh Conditions for the Separation of Oil and Water. *Angewandte Chemie international,* 10. Januar 2013, vol. 52 (7), 1986-1989
- **L.J. GIBSON ; M.F. ASHBY.** Cellular Solids. Cambridge University Press, 1997